# EUROPÄISCHE PATENTSCHRIFT

(11) **EP 2 867 174 B1**
(45) Veröffentlichungstag und Bekanntmachung des Hinweises auf die Patenterteilung: **07.09.2016**
(21) Anmeldenummer: 13722305.3
(22) Anmeldetag: 18.04.2013
(51) Int. Cl.: C02F 9/00, C02F 1/24, C02F 1/44, B01D 21/00, B01D 21/01, C02F 1/52, C02F 101/30, C02F 103/08

(54) **VORRICHTUNG UND VERFAHREN ZUR WASSERREINIGUNG MIT FLOTATION**
DEVICE AND METHOD FOR PURIFYING WATER WITH FLOTATION
DISPOSITIF ET PROCÉDÉ D'ÉPURATION DE L'EAU PAR FLOTTATION

(30) Priorität: 09.05.2012 DE 102012207731
(43) Veröffentlichungstag der Anmeldung: 06.05.2015
(73) Patentinhaber: Akvolution GmbH, 10623 Berlin (DE)
(72) Erfinder: Repke, Jens-Uwe, 12621 Berlin (DE); Wozny, Günter, 16548 Glienicke/Nordbahn (DE); Beery, Matan, 10559 Berlin (DE)
(74) Vertreter: Maikowski & Ninnemann Patentanwälte Partnerschaft mbB
(86) Internationale Anmeldenummer: PCT/EP2013/058079
(87) Internationale Veröffentlichungsnummer: WO 2013/167358

(56) Entgegenhaltungen:
- WO-A1-98/31634
- WO-A1-2008/013349
- WO-A1-2011/026758
- CA-A1- 2 527 525
- DE-A1- 10 118 940
- US-A1- 2004 217 058
- US-A1- 2009 211 974

## Beschreibung

Die vorliegende Anmeldung betrifft eine Vorrichtung zur Reinigung von Wasser gemäß dem Oberbegriff des Anspruchs 1 sowie ein Verfahren zur Reinigung von Wasser gemäß Anspruch 21.

Die Bereitstellung von Süßwasser zur ausreichenden Versorgung der stetig wachsenden Weltbevölkerung ist eine der größten Herausforderungen, vor die die Weltgemeinschaft in den kommenden Jahrzehnten gestellt ist.

Aufgrund der begrenzten Ressourcen zur Bereitstellung von Süßwasser ist es zunehmend erforderlich, geeignete Alternativen, insbesondere auf der Basis von Meerwasser, zur ausreichenden Versorgung mit Trinkwasser zu entwickeln und bereitzustellen.

So wurden bereits in den 50er und 60er Jahren des vergangenen Jahrhunderts erste großindustrielle Meerwasserentsalzungsanlagen im Nahen Osten in Betrieb genommen, in denen das Salz thermisch vom Wasser mittels Verdampfung und Kondensation abgetrennt wurde. In einer Weiterentwicklung der Meerwasserentsalzungsanlagen entstanden in den 1970er Jahren die ersten Umkehrosmoseanlagen zur Meerwasserentsalzung, deren Betrieb energetisch im Vergleich zu einer rein thermischen Wasserbehandlung wesentlich günstiger ist.

Die Umkehrosmose oder auch Reversosmose ist ein physikalisches Verfahren zur Aufkonzentrierung von in Flüssigkeiten gelösten Stoffen, bei der mit Druck der natürliche Osmoseprozess umgekehrt wird. Hierbei wird auf einer Seite einer semipermeablen Membran ein größerer Druck als der natürliche osmotische Druck erzeugt. Im Fall der Meerwasserentsalzung wird das Meerwasser zur Überwindung des osmotischen Drucks unter hohem Druck durch eine semipermeable Membran aus Polyamid, PTFE oder sulfonierten Co-Polymeren mit einem Porendurchmesser von 5x10⁻⁷ bis 5x10⁻⁶ mm gepresst. Die semipermeable Membran wirkt wie ein Filter und lässt lediglich Wassermoleküle durch die Membran, während Salze und andere Stoffe, wie Bakterien und Viren oder auch Giftstoffe, wie Schwermetalle, zurückgehalten werden, so dass sauberes Trinkwasser gewonnen wird. Der osmotische Druck steigt mit zunehmender Salzkonzentration, so dass der Prozess irgendwann zum Stehen kommen würde. Um dem entgegenzuwirken, wird das Konzentrat abgeführt. Eines der größten Probleme bei der Umkehrosmose besteht darin, dass es zur Ablagerung von zurückgehaltenen bzw. gefilterten Stoffen auf der Umkehrsomose-Membran kommt, die ein Membran-Fouling hervorrufen. Um dem unerwünschten Membran-Fouling entgegenzuwirken, sollte das zu reinigende Wasser möglichst frei von groben Partikeln, organischen Stoffen und Verunreinigungen sein, bevor es in die Umkehrosmose-Anlage gelangt. Entsprechend erfordert der Prozess der Meerwasserentsalzung eine gründliche Vorreinigung des zu entsalzenden Meerwassers.

Verschiedene Methoden und Vorrichtungen wurden in der Vergangenheit zur Vorreinigung des Wassers, insbesondere Salzwassers verwendet. So können entsprechende Anlagen mit Vorfiltern ausgestattet sein, die eine Abtrennung von Grobstoffen bis zu einer Partikelgröße von 20 µm ermöglichen. Zusätzliche Aktivkohlefilter ermöglichen die Abscheidung von organischen Stoffen, wie zum Beispiel Pflanzenschutzmitteln oder anderen Giftstoffen. Es ist auch möglich, eine UV-Bestrahlung in einem Vorreinigungsschritt zu etablieren, wodurch eine Vielzahl von gesundheitsgefährdenden Keimen, wie Viren und Bakterien, abgetötet werden können.

Ein sich in den vergangenen Jahren etablierter und häufig genutzter Ansatz zur Wasservorreinigung für eine Umkehrosmose stellt das Verfahren der Dissolved Air Flotation (DAF) dar. DAF ist eine spezielle Form der Flotation. Flotation ist ein Schwerkraftabscheideverfahren zur Trennung von Fest-Flüssig- oder Flüssig-Flüssig-Systemen. Hierbei werden Gasblasen, zum Beispiel aus Luft, erzeugt und in die Flüssigphase eingeführt, wobei sich in der Flüssig-Phase befindende hydrophobe Partikel, wie zum Beispiel organische Stoffe, an diesen ebenfalls hydrophoben Blasen anlagern und durch die Gasblasen verursachten vergrößerten Auftrieb an die Oberfläche aufsteigen. An der Oberfläche der Flüssigphase sammeln sich diese Agglomerate zu einer Schlammschicht an, die leicht mechanisch abtrennbar ist.

Bei dem DAF-Verfahren wird ein in einer Flüssigkeit bei erhöhtem Druck in gelöster Form vorliegendes Gas in die zu reinigende Flüssigkeit eingeführt. Durch den Druckabfall in der zu reinigenden Flüssigkeit entweicht das Gas in Form kleinster Blasen, welche einen Durchmesser im Mikrometerbereich aufweisen. Die aufsteigenden Gase weisen somit eine sehr hohe spezifische Oberfläche auf, an die sich die hydrophoben Partikel aus dem zu reinigenden Wasser anlagern können. Daher eignet sich die Flotation, insbesondere DAF, zur Abtrennung von Schwebstoffen mit sehr kleiner Dichte, wie zum Beispiel Mikroalgen oder zur Abtrennung von organischen hydrophoben Inhaltsstoffen.

Im Einzelnen umfasst eine DAF-Vorrichtung eine Flockungseinheit zum Ausflocken der Schwebstoffe und organischen Inhaltsstoffe und eine so genannte Flotationszelle. Das verschmutzte, mit einem geeigneten Ausflockungsmittel versehene zu reinigende Wasser tritt aus der Ausflockungseinheit in die Kontaktzone der Flotationszelle ein, in welche mit Gas übersättigtes Wasser injiziert wird und mit dem in die Kontaktzone eingetretenen zu reinigenden Wasser in unmittelbaren Kontakt tritt. Aufgrund des in der Flotationszelle herrschenden verminderten Druckes treten die Gasblasen aus der injizierten Lösung aus und es bilden sich Kleinstblasen mit Durchmessern von 10 bis 100 µm. Dieser Blasenschwarm wird "white water" genannt. Diese kleinsten Blasen lagern sich an die ausgeflockten Partikel an und steigen in Form eines Flocken-Gasblasen-Agglomerats oder Gemisches nach oben in die Separationszone der Flotationszelle. Durch das Aufsteigen des Flocken-Gasblasen-Agglomerats bildet sich an der Wasseroberfläche der Flotationszelle eine Feststoffschicht (so genanntes Float), die mechanisch mit geeigneten Räumeinrichtungen zum Beispiel mit Scrapern abgetrennt und gesammelt wird. Unterhalb dieser Feststoffschicht oder Float-Schicht befindet sich das gereinigte Wasser, das zumindest teilweise nach Übersättigung mit einem entsprechenden Gas in die Kontaktzone der Flotationszelle zurückgeführt wird. Der andere Teil des gereinigten Wassers wird zur weiteren Verwendung abgeführt.

Das DAF-Verfahren ermöglicht eine sehr gute Abscheidung von Mikroalgen und anderen Kleinstorganismen aus hochbeladenem Schmutzwasser, erfordert jedoch einen relativ hohen Energieverbrauch aufgrund der Einbringung von Luft mittels einer Sättigungskolonne in den zurückgeführten Teilstrom. Auch ist es mittels DAF nicht möglich, sehr trübes und stark schlammbelastetes Wasser zu behandeln.

Auch die Verwendung von Gasmembranen im Zusammenhang mit der Wasserreinigung ist bekannt. So beschreibt WO 2008/013349 A1 keramische Membrane zur Erzeugung von Mikroblasen. Die Porengröße der in diesem Dokument beschriebenen Membrane liegt in einem Bereich von 0,001 µm bis 0,05 µm. Das Dokument CA 2 527 525 A1 beschreibt ein Verfahren zur Reinigung von Fluss- oder Kanalwasser (und damit zur Reinigung von Süsswasser), wobei in einem ersten Schritt zunächst H₂O₂ eingeführt wird und anschließend in einem zweiten Schritt ein Flotationsschritt vorgenommen wird. Im Rahmen des Flotationsschrittes werden auch Luftblasen zur Flotation eingeführt.

Eine Aufgabe der vorliegenden Erfindung bestand somit darin, eine Vorrichtung und ein Verfahren zur Verfügung zu stellen, mit welchem die Nachteile der bekannten Flotationsverfahren, insbesondere des DAF-Verfahrens mit seinem hohen Energieverbrauch verringert bzw. überwunden werden können.

Diese Aufgabe wird mit einer Vorrichtung mit den Merkmalen des Anspruchs 1 sowie mittels eines Verfahrens gemäß dem Anspruch 14 gelöst. Die Erfindung wird durch die nachstehenden Ansprüche definiert.

Entsprechend umfasst eine Vorrichtung zur Reinigung von Wasser, insbesondere Salzwasser oder Meerwasser, mindestens einen Behälter zur Aufnahme von mit mindestens einem Ausflockungsmittel versetzten Wasser zur Abtrennung von im Wasser enthaltenen organischen und ggf. biologischen Bestandteilen wie z.B. Mikroalgen, mindestens eine in dem Behälter angeordnete Begasungseinheit und des Weiteren mindestens eine Filtrationseinheit. Der mindestens eine Behälter kann auch als Flotationszelle oder Reinigungsbecken bezeichnet werden.

Erfindungsgemäß umfasst der Behälter (Flotationszelle) mindestens eine Kontaktzone zur Kontaktierung des mit dem Ausflockungsmittel versetzten Wassers, wie z.B. dem Flüssigkeitsstrom aus der Flockulationseinheit in den Behälter, mit mindestens einem Gas, insbesondere Luft, zur Ausbildung eines Flocken-Gasblasen-Agglomerats sowie mindestens eine Separationszone zur Abtrennung der durch das Gas aufgetriebenen ausgeflockten organischen Bestandteile.

Gemäß der vorliegenden Erfindung sind die mindestens eine Begasungseinheit aus einer oder mehreren keramischen Begasungsmembranen mit einer mittleren Porengröße von 2 µm in der Kontaktzone des Behälters und die mindestens eine Filtrationseinheit in der Separationszone des Behälters angeordnet.

Die vorliegende Vorrichtung ist dadurch gekennzeichnet, dass die Begasungseinheit direkt mit einer Druckgasleitung oder einer Gasflasche verbunden ist, so dass das mindestens eine Gas zur Ausbildung des Flocken-Gasblasen-Agglomerats über die mindestens eine in der Kontaktzone des Behälters angeordnete Begasungseinheit ohne Verwendung eines Flüssigkeitträgers direkt in diesen Behälter injiziert wird. Wie noch später im Detail beschrieben, wird das Gas demnach direkt in den Behälter ohne vorheriges Auflösen oder Einpressen in eine Flüssigkeit eingetragen.

Die mindestens eine Filtrationseinheit ist bevorzugt versetzt entlang einer horizontalen Ebene des Behälters zu der Begasungseinheit angeordnet. "Versetzt" im Sinne der vorliegenden Erfindung bedeutet dabei, dass die Filtrationseinheit seitlich oder räumlich bzw. horizontal versetzt von der Begasungseinheit angeordnet ist; Filtrationseinheit und Begasungseinheit sind also nicht vertikal übereinander angeordnet und überlappen nicht, sondern sind bevorzugt entlang einer horizontalen Ebene des Behälters nebeneinander bzw. zueinander benachbart angeordnet. Die aus der Begasungseinheit austretenden Gasblasen treffen also nicht direkt und unmittelbar auf eine senkrecht über der Begasungseinheit liegende Filtrationseinheit. Filtrationseinheit und Begasungseinheit sind in räumlich verschiedenen Bereichen bzw. Zonen des Behälters angeordnet.

Dem mindestens einen Behälter kann eine Flockulationseinheit zur Aufnahme des zu reinigenden Wassers und von mindestens einem Ausflockungsmittel zur Ausflockung von im Wasser enthaltenen organischen Bestandteilen vorgeschaltet sein. Flockulationseinheit und Behälter stehen bevorzugt miteinander in flüssiger Kommunikation und die in der Flockulationseinheit ausgeflockten organischen Bestandteile können mittels eines Flüssigkeitsstroms aus der Flockulationseinheit in den Behälter transportiert werden.

Die Flockulationseinheit kann entweder als eine vom Behälter separate Einheit ausgebildet sein oder in den Behälter integriert sein, d.h. mit dem Behälter einstückig ausgebildet sein. Bei einer Integration der Flockulationseinheit in den Behälter kann die Flockulationseinheit mindestens einen, bevorzugt zwei, von der eigentlichen Flotationszelle abgetrennten Abschnitt oder Bereich umfassen. In diesen abgetrennten Bereich werden das zu reinigende Wasser und das Ausflockungsmittel eingeführt und ggf. unter Verwendung eines Rührers intensiv vermischt. Das mit dem Ausflockungsmittel versetzte Wasser kann dann z.B. entweder in einen zweiten von der Flotationszelle abgetrennten Bereich des Behälters eingeführt werden, in welchem z.B. weitere Flockungshilfsmittel zugeführt werden können, oder aber direkt in die Flotationszelle in die Kontaktzone der Flotationszelle, d.h. in Richtung Begasungseinheit eingespeist werden.

Die vorliegende Vorrichtung kombiniert somit das Verfahren der Flotation mit einer Membranfiltration. Durch die zusätzliche Membranfiltration erfolgt eine bessere Reinigung des Wassers als durch bloße Flotation. Im Umkehrschluss kann die Membranfiltration effektiver durchgeführt werden, da im Vorfeld der Filtration bereits Partikel durch die Flotation entfernt wurden. Durch die Kombination von Flotation und Filtration in einem einzigen Behälter wird die Prozessdynamik verbessert, da ein kleinerer Behälter in Form einer Flotationszelle einsetzbar ist und ein höherer Durchsatz erreicht wird. Auch ist kein RecycleStrom, d.h. keine Rückführung wie bei einer DAF mehr notwendig, wie unten noch erläutert wird. Dies bedingt wiederum, dass der Energiebedarf an Pumpen kleiner wird und auch der Platzbedarf insgesamt geringer ist. Durch den vorliegenden Prozess entsteht nur sehr wenig Abwasser, da die Feststoffschicht unmittelbar mit einem sehr kleinen Wassergehalt abgetrennt werden kann. Alle diese Faktoren üben eine positive Auswirkung auf die Wirtschaftlichkeit und Umweltverträglichkeit des vorliegenden Verfahrens aus. Mit dem vorliegenden Verfahren sind sowohl Prozessintegration als auch Prozessintensivierung möglich, die zu einem geringeren Platzbedarf und geringeren Investitions- und Betriebskosten führen und zusätzlich das Reinigungsergebnis verbessern.

Der in der vorliegenden Vorrichtung verwendete Behälter, zum Beispiel in Form einer Flotationszelle, ist bevorzugt in Form eines an einer oberen der Bodenfläche gegenüberliegenden Seite offenen Behälters oder Beckens der Länge a, der Breite b und einer Höhe h ausgebildet, wobei bevorzugt a > b und a > h ist. Breite b und Höhe h können gleich oder unterschiedlich sein. Der Behälter umfasst somit bevorzugt zwei längliche Seitenwände und zwei kurze Seitenwände. Demnach ist insbesondere ein Behälter als Flotationszelle oder Reinigungsbecken geeignet, der eine rechteckige Konfiguration aufweist. Der Behälter weist demnach sechs rechteckige Flächen bzw. Wände auf, wobei die aus a x b gebildete Flächen als Bodenfläche bzw. der Bodenfläche gegenüberliegende offene Seite bzw. Fläche, die aus a x h gebildeten Flächen als längliche Seitenwände und die aus b x h gebildeten Flächen als kurze Seitenwände des Behälters beschrieben werden. Die oben erwähnte horizontale Ebene des Behälters verläuft dabei bevorzugt parallel zur Länge a des Behälters.

Wie ausgeführt ist die Kontaktzone der Bereich, in dem der Flüssigkeitsstrom aus der Flockulationseinheit mit dem eingetragenen Gas in Kontakt tritt und es zur Ausbildung eines Flocken-Gasblasen-Agglomerats kommt. Der Bereich der Kontaktzone wird bevorzugterweise durch die Anordnung bzw. Positionierung der Begasungseinheit im Behälter- bzw. Beckenboden bestimmt. So kann der Bereich der Kontaktzone eine Länge aufweisen, die in einem Bereich zwischen dem 0,15-0,25 fachen, bevorzugt 0,2 fachen der Länge a des Behälters liegt, und eine Breite aufweist, die der Breite b des Behälters entspricht. Die Höhe der Kontaktzone wird durch den Flüssigkeitsstand des mit dem Ausflockungsmittel versetzten Wassers im Behälter bestimmt.

Die Separationszone ist der Bereich des Behälters, in welchem die Abtrennung der durch das Gas aufgetriebenen ausgeflockten organischen Bestandteile vom Wasser erfolgt. Diese Abtrennung der aufgetriebenen organischen Agglomerate erfolgt bevorzugterweise an der Oberfläche mittels geeigneter mechanischer Einrichtungen, wie z.B. Räumeinrichtungen z.B. in Form von Scrapern. Derartige Mittel sind dem Fachmann bekannt.

Die Separationszone umfasst einen gegenüber der Kontaktzone größeren Bereich des Behälters. So umfasst die Separationszone bevorzugt einen Bereich mit einer Länge, die dem 0,75 - 0,85 fachen, bevorzugt 0,8 fachen der Länge a des Behälters entspricht. Die Breite der Separationszone korrespondiert zur Breite b des Behälters. Die Höhe der Separationszone wird durch den Flüssigkeitsstand des mit dem Ausflockungsmittel versetzten Wassers im Behälter bestimmt.

Der Übergang zwischen Kontaktzone und Separationszone im Behälter ist bevorzugterweise fließend, d.h. es gibt keine scharfe räumliche Trennung von Kontaktzone und Separationszone im Behälter. Lediglich ein weiter unten beschriebenes Leitblech kann als eine Art räumliche Grenze bzw. Trennlinie zwischen Kontaktzone und Separationszone betrachtet werden.

In einer Ausführungsform der vorliegenden Vorrichtung ist die mindestens eine Filtrationseinheit in dem Behälter unterhalb der durch die aufgetriebenen, ausgeflockten organischen Bestandteile gebildeten Schicht angeordnet. Es ist insbesondere bevorzugt, wenn die mindestens eine Filtrationseinheit am Boden des Behälters innerhalb der Separationszone angeordnet ist. Mit anderen Worten, die Filtrationseinheit ist getaucht in der Separationszone des Behälters angeordnet.

Die Filtrationseinheit weist insbesondere eine an die Flotationszelle angepasste rechteckige Form auf. Die Länge der Filtrationseinheit entspricht bevorzugterweise dem 0,5 bis 0,7fachen, insbesondere bevorzugt dem 0,6fachen der Länge a der Flotationszelle. Die Breite der Filtrationseinheit entspricht bevorzugterweise dem 0,6 bis 0,9fachen, insbesondere bevorzugt dem 0,8fachen der Breite b der Flotationszelle. Somit erstreckt sich die Filtrationseinheit nicht vollständig über die gesamte Breite des Behälters, sondern weist vielmehr einen geringen Abstand zu den länglichen Seitenwänden des Behälters auf. In der Höhe ist die Filtrationseinheit so ausgebildet, dass diese in einem Bereich zwischen dem 0,1 bis 0,4fachen, bevorzugt 0,2 bis 0,3fachen der Höhe h des Behälters entspricht. Selbstverständlich sind auch andere Dimensionen für die zum Einsatz kommende Filtrationseinheit denkbar.

In einer bevorzugten Ausführungsform liegt die mindestens eine Filtrationseinheit in Form einer keramischen Filtrationsmembran, insbesondere in Form einer keramischen Mikro- oder Ultrafiltrationsmembran vor. Derartige keramische Filtrationsmembranen weisen eine hohe chemische Beständigkeit und eine lange Lebensdauer auf. Außerdem sind keramische Filtrationsmembranen wasserdurchlässiger und weniger anfällig zu Fouling, da sie hydrophilischer als Polymer-Membrane sind. Aufgrund ihrer mechanischen Stabilität wird auch keine Vorsiebung benötigt. Als besonders geeignet hat sich ein Membranmodul erwiesen, das eine mittlere Porengröße von 20 nm bis 500 nm, bevorzugt von 100 nm bis 300 nm, insbesondere bevorzugt von 200 nm aufweist.

Das bevorzugt verwendete Filtrationsmembranmodul kann aus mehreren Platten, einem oder mehreren Rohren oder weiteren geometrischen Formen bestehen.

Als besonders geeignetes keramisches Material hat sich α-Al₂O₃ erwiesen, jedoch sind auch andere keramische Oxide und Nichtoxide wie Siliciumcarbid oder Zirkoniumoxid zur Verwendung in der Filtrationseinheit einsetzbar.

In einer weiteren bevorzugten Ausführungsform umfasst die Vorrichtung mindestens ein Mittel zur Belüftung der Filtrationseinheit, um die mindestens eine Filtrationseinheit in geeigneter Weise zu belüften. Ein geeignetes Belüftungsmittel kann zum Beispiel in Form von gelochten Schläuchen vorliegen. Das Belüftungsmittel kann mit Luft gespeist werden, um große Scherkräfte auf der Oberfläche der Filtrationseinheit zur Vermeidung oder Minimierung von Fouling auf der Membranoberfläche aufzubringen. Weitere Möglichkeiten zur Verhinderung bzw. Reduzierung des Foulings der Filtrationseinheit sind die Behandlung mit geeigneten chemischen Substanzen, wie Zitronensäure zur Verhinderung eines anorganischen Foulings bzw. einem geeigneten Oxidationsmittel, wie zum Beispiel Natriumhypochlorid zur Reduzierung des biologischen Foulings.

In einer Ausführungsform der vorliegenden Vorrichtung werden über eine in der Kontaktzone befindliche Begasungseinheit kleinste Gasblasen, insbesondere Luftblasen, in das Reinigungsbecken eingetragen. Die verwendete Begasungseinheit kann aus einer oder mehreren Platten bzw. Scheiben, Rohren oder weiteren geometrischen Formen bestehen. Als besonders geeignetes Material hat sich Keramik erwiesen, insbesondere Aluminiumoxid α-AL₂O₃. Jedoch sind auch andere keramische Oxide und Nichtoxide wie Siliciumcarbid oder Zirkoniumoxid einsetzbar. Sie kann also auch als Membran bezeichnet werden.

In einer Ausführungsform der vorliegenden Vorrichtung ist die darin verwendete mindestens eine Begasungseinheit aus 1 bis 10, bevorzugt 2 bis 6, insbesondere bevorzugt aus 4 bis 6 Begasungsmembranen aufgebaut. Die verwendeten keramischen Begasungsmembranen haben eine mittlere Porengröße von 2 µm. Der mittlere Blasendurchmesser der über die Begasungsmembran eingetragenen Gasblasen, insbesondere Luftblasen, kann zwischen 10 µm bis 100 µm, bevorzugt 20 µm bis 80 µm, insbesondere bevorzugt 50 µm betragen. Die Blasenerzeugung an der Begasungsmembran kann insbesondere über einen geeigneten Gasvolumenstrom und Druck beeinflusst werden. Je höher der Druck ist, desto mehr und desto größere Blasen entstehen dabei. Der eingestellte Volumenstrom spielt im vorliegenden Fall eine lediglich untergeordnete Rolle.

In einer besonders bevorzugten Ausführungsform sind die Begasungsmembranen parallel zueinander entlang der Breite des Behälters angeordnet. Die Zahl der Begasungsmembranen richtet sich entsprechend nach der Breite des Behälters und den Dimensionen der einzelnen Begasungsmembrane. So können z.B. mindestens vier parallele Begasungsmembranen zur Erzeugung der Gasblasen, insbesondere Luftblasen, am Boden des Begasungsbehälters, das heißt des Behälters zur Aufnahme des mit dem Ausflockungsmittel versetzten Wassers, angeordnet sein. Es ist generell auch möglich, dass die Begasungsmembranen senkrecht übereinander angeordnet sind. In diesem Fall richtet sich die Anzahl der übereinander angeordneten Begasungsmembranen nach der Höhe des Behälters und des Füllstandes des Behälters.

Die Anordnung der Begasungseinheit am Behälterboden kann dabei derart sein, dass die aufsteigenden Gasblasen nicht in einen Bereich zwischen einem ersten Leitblech (siehe hierzu auch Ausführungen weiter unten) und einer Seitenwand des Behälters gelangen. Bevorzugterweise ist die Begasungseinheit mit einem Abstand von einer Seitenwand, insbesondere einer kurzen Seitenwand, des Begasungsbehälters angeordnet, wobei dieser Abstand der Begasungsmembran von einer Seitenwand dem Abstand, bzw. der Öffnung zwischen einem Leitblech und einer Seitenwand des Begasungsbehälters entspricht.

Wie oben erwähnt erfolgt der Gaseintrages vorliegend durch eine direkte Injizierung eines Gases, wie zum Beispiel Luft in Form von feinsten Blasen über die Begasungsmembran. Der Vorteil einer direkten Injizierung eines Gases z.B. über die beschriebene Begasungseinheit gegenüber der DAF besteht insbesondere darin, dass Recyclestrom und Sättigungskolonne wegfallen, da das Gas, wie zum Beispiel die Luft, direkt einer Druckluftleitung oder einer Gasflasche entnehmbar ist. Dies ist insbesondere im Falle der Vorreinigung von Meerwasser für die Entsalzung besonders günstig, da die erhöhte Temperatur und der erhöhte Salzgehalt des Meerwassers eine Luftsättigung im Rahmen der DAF erschweren, da sich weniger Luft im Recyclestrom auflöst. Somit wird auch keine Verdichtungsenergie für das Erreichen eines hohen Druckniveaus im gesamten Recyclestrom benötigt. Auch kann ein Teil der injizierten Gasblasen durch Verwirbelungen unmittelbar in die Filtrationszone und somit in die Nähe der Filtrationseinheit gelangen, bevor diese an die Wasseroberfläche steigen. Dadurch entstehen an der Filtrationseinheit zusätzliche Scherkräfte, die einem Fouling entgegenwirken können. Der wesentliche Vorteil der Verwendung der vorliegenden keramischen Begasungseinheit im Vergleich zu DAF liegt in der einfachen und energiearmen Erzeugung von Mikroblasen.

In einer bevorzugten Ausführungsform der vorliegenden Vorrichtung ist weiterhin zwischen der Kontaktzone und der Separationszone des Begasungsbehälters mindestens ein erstes Leitblech zum Lenken der durch das Gas aufgetriebenen ausgeflockten organischen Bestandteile aus der Kontaktzone in die Separationszone angeordnet. Dieses erste Leitblech ist bevorzugt parallel zu den zwei gegenüber liegenden kurzen Seitenwänden des Begasungsbehälters angeordnet. Dabei ist die Breite b' dieses mindestens ersten Leitbleches bevorzugt gleich zur Breite b des Begasungsbehälters und somit gleich der Länge der kurzen Seitenwand. Die Höhe h' des mindestens ersten Leitbleches ist allerdings kleiner als die Höhe h des Behälters, so dass eine Kommunikation zwischen der Kontaktzone und der Separationszone im Begasungsbehälter gewährleistet ist.

Das mindestens erste Leitblech ist dabei bevorzugt am Boden des Behälters beweglich oder starr angeordnet.

Darüber hinaus ist die Anordnung des ersten Leitbleches bevorzugterweise derart, dass zwischen dem ersten Leitblech und dem Boden des Behälters ein Winkel zwischen 90° und 50°, bevorzugt zwischen 80° und 55°, insbesondere bevorzugt zwischen 75° und 60°, besteht. Das erste Leitblech ist bevorzugterweise so ausgerichtet, dass es bei einem Winkel von kleiner 90° in Richtung hin zur Separationszone weg von der Kontaktzone geneigt ist, wodurch der mit den Gasblasen versetzte Flüssigkeitsstrom, wie zum Beispiel in Form einer Flüssigkeit mit Flocken-Gasblasenagglomeraten, in gerichteter Weise aus der Kontaktzone entlang des geneigten ersten Leitbleches hin zur Separationszone und dabei bevorzugterweise unmittelbar hin zur Oberfläche der Flüssigkeit im Begasungsbehälter in der Separationszone geleitet wird. In einer besonders bevorzugten Ausführungsform ist das erste Leitblech mit einem Winkel von 60° in Bezug auf den Behälterboden angeordnet, wodurch eine Lenkung der Flocken-Luftblasen-Aggregate von der Kontaktzone in die Separationszone und hier insbesondere oberhalb der Filtrationseinheit erfolgt.

Neben dem mindestens ersten Leitblech kann in einer Ausführungsform der vorliegenden Vorrichtung mindestens ein zweites Leitblech im Bereich der Kontaktzone an den gegenüberliegenden länglichen Seitenwänden des Behälters angeordnet sein. Das mindestens zweite Leitblech ist dabei bevorzugterweise an den Seitenkanten, die die nach oben offene Seite des Behälters begrenzen, der gegenüberliegenden länglichen Seitenwände des Behälters durch geeignete Befestigungsmittel befestigt. Das zweite Leitblech ist dabei bevorzugterweise so angeordnet, dass zwischen dem Boden des Behälters und dem zweiten Leitblech ein Abstand besteht. Mit anderen Worten, das zweite Leitblech weist keinen Kontakt mit dem Boden des Behälters auf. Die Höhe h" des zweiten Leitbleches ist somit kleiner als die Höhe h des Behälters, wobei die Breite b" des zweiten Leitbleches bevorzugt gleich zur Breite b des Behälters ist und somit in der Breite der kurzen Seitenwand des Behälters entspricht.

In einer besonders bevorzugten Ausführungsform weisen das erste Leitblech und das zweite Leitblech gleiche Abmaße auf, d.h. b' = b" und h' = h".

In einer bevorzugten Ausführungsform der vorliegenden Vorrichtung sind das mindestens erste Leitblech und das mindestens zweite Leitblech versetzt zueinander und gegenüberliegend angeordnet, so dass eine mäanderförmige Strömung des in den Behälter eintretenden mit dem Ausflockungsmittel versetzten Wassers bewirkbar ist. Unter einer gegenüberliegenden Anordnung ist vorliegend zu verstehen, dass das erste und das zweite Leitblech an gegenüberliegenden Seiten des Behälters befestigt sind. Wie beschrieben, ist das erste Leitblech am Boden des Behälters angeordnet und weist einen Abstand zur gegenüberliegenden offenen Seite des Behälters auf, während das zweite Leitblech bevorzugt an den Seitenkanten der länglichen Seitenwände des Behälters, die die nach oben offene Seite des Behälters begrenzen, so befestigt ist, dass zwischen dem Boden des Behälters und dem zweiten Leitblech ein Abstand existiert.

Des Weiteren kann das zweite Leitblech an den die nach oben offene Seite des Behälters begrenzenden Seitenkanten der länglichen Seitenwänden des Behälters in einem Winkel zwischen 90° und 70°, bevorzugt zwischen 85° und 75°, insbesondere bevorzugt in einem Winkel von 80° in Bezug auf die dem Behälterboden gegenüberliegende offene Seite des Behälters angeordnet sein. Dabei ist das zweite Leitblech bevorzugterweise so ausgerichtet, dass es bei einem Winkel von kleiner 90° in Richtung hin zu einer der insbesondere kurzen Seitenwände des Behälters weg von der Separationszone geneigt ist. Es ist auch denkbar, dass das zweite Leitblech weg von der ersten kurzen Seitenwand des Behälters geneigt ist.

In einer bevorzugten Ausführungsform der vorliegenden Vorrichtung sind die Filtrationseinheit, das erste Leitblech, das zweite Leitblech und Begasungseinheit entlang der Länge a des Behälters hintereinander angeordnet. Folgt man z. B. dem Strom des mit dem Ausflockungsmittel versetzten Wassers aus der Flockulationseinheit in den Behälter, dann ist die Reihenfolge bzw. Abfolge der in dem Behälter angeordneten Mittel wie folgt: zweites Leitblech, Begasungseinheit, erstes Leitblech und Filtrationseinheit. Es ist auch möglich, dass es zu einer teilweisen Überlappung der Anordnung von zweitem Leitblech und Begasungseinheit kommt, da das zweite Leitblech zumindest teilweise oberhalb der Begasungseinheit angeordnet sein kann. Entsprechend trifft der Strom des mit dem Ausflockungsmittel versetzten Wassers bei Eintritt in den Behälter zunächst unmittelbar auf das zweite Leitblech, durch welches der Strom gezielt in Richtung der am Boden des Behälters angeordneten Begasungseinheit gelenkt wird; der Strom des mit dem Ausflockungsmittel versetzten Wassers wird an der Begasungseinheit mit mindestens einem Gas, insbesondere Luft, versetzt und das so ausgebildete Flocken-Gasblasen-Agglomerat wird durch das erste Leitblech, das bevorzugt geneigt angeordnet ist, in Richtung Separationszone und Filtrationseinheit geleitet. Das vorliegende System weist entsprechend eine horizontale Funktionsweise auf.

Entsprechend kann das mit dem Ausflockungsmittel versetzte Wasser aus der Flockulationseinheit auf der offenen oberen Seite des Behälters in diesen eingetragen werden, d. h. das Flockungsgemisch kann von oben in den Behälter eingeführt werden. Wird das Flockungsgemisch von oben in den Behälter eingeführt, ist es besonders bevorzugt, wenn das mit dem Ausflockungsmittel versetzte Wasser in einen Bereich des Behälters eingetragen wird, der durch das zweite Leitblech und der zu dem zweiten Leitblech am nächsten liegenden kurzen Seitenwand begrenzt wird.

Wie bereits oben erwähnt, kann das zweite Leitblech einen Neigungswinkel hin zur nächstliegenden kurzen Seitenwand des Behälters aufweisen. Die Größe des Neigungswinkels des zweiten Leitbleches ist dabei bevorzugt in Abhängigkeit von der Menge des einströmenden mit einem Ausflockungsmittel versetzten Wassers einstellbar. Dabei kann der Neigungswinkel so eingestellt werden, dass das zweite Leitblech in Richtung zur Seitenwand des Begasungsbehälters führt, diese aber nicht berührt, so dass eine Eintritts- bzw. Durchtrittsöffnung bzw. -fläche zwischen dem zweiten Leitblech und der nächstliegenden kurzen Seitenwand des Behälters verbleibt.

Die Durchtrittsfläche für das mit dem Ausflockungsmittel versetzte Wasser (Flockungsgemisch), das aus dem Flockulationsbehälter in den Behälter fließt, ist bevorzugt so eingestellt, so dass die Fließgeschwindigkeit des Flockungsgemisches an der Durchtrittsfläche zwischen zweitem Leitblech und kurzer Seitenwand des Behälters groß ist. Es ist z. B. vorstellbar, dass die Durchtrittsfläche eine Breite von 1-5 cm aufweist. Das zweite Leitblech ermöglicht einen gleichmäßigen Eintrag des Flockungsgemisches über die gesamte Breite des Behälters. Auch kann die Kontaktzone K, die sich zwischen dem zweiten Leitblech und der kurzen Seitenwand ausbildet, durch die Größe der Durchtrittsfläche bestimmt werden. Die bevorzugt geringe Durchtrittsfläche des Flockungsgemisches zwischen zweitem Leitblech und kurzer Seitenwand des Behälters sowie die dadurch bedingt große Fließgeschwindigkeit des Flockungsgemisches durch den Durchtrittsspalt führt dazu, dass keine aus der Begasungseinheit aufsteigenden Gasblasen entgegen der Eintrittsrichtung des Flockungsgemisches in den Behälter aufsteigen.

Neben dem oben erwähnten Eintrag des mit einem Ausflockungsmittel versetzten Wassers aus der Flockulationseinheit auf der oberen offenen Seite des Behälters ist es generell auch möglich, dass mit dem Ausflockungsmittel versetzte Wasser bzw. Flockungsgemisch aus der Flockulationseinheit parallel und mit einem geringen Abstand zum Boden des Behälters in den Behälter einzutragen, insbesondere einzudüsen. Der Abstand zwischen dem Boden des Behälters und des Eintrags des Flockungsgemisches ist dabei abhängig von der Gesamtgröße des Behälters.

Die Aufgabe der vorliegenden Erfindung wird ebenfalls mittels eines Verfahrens zur Reinigung von Wasser, insbesondere zur Vorreinigung von Meerwasser, unter Verwendung der erfindungsmäßigen Vorrichtung gelöst. Ein solches Verfahren umfasst dabei die Schritte:
- Einführen von mit mindestens einem Ausflockungsmittel versetzten Wasser in mindestens einen Behälter;
- Kontaktieren des mit mindestens einem Ausflockungsmittel versetzten Wassers mit mindestens einem mittels mindestens einer Begasungseinheit in einen Behälter eingetragenen Gases, insbesondere Luft, zur Ausbildung eines Flocken-Gasblasen-Agglomerats, insbesondere eines Flocken-Mikrogasblasen-Agglomerats,
- Abtrennen des an die Oberfläche des im Behälter befindlichen Wassers gestiegenen Flocken-Gasblasen-Agglomerats,
- Abziehen des von dem Flocken-Gasblasen-Agglomerats befreiten Wassers durch mindesten eine in dem Behälter angeordnete Filtrationseinheit, und
- Zuführen des durch die Filtrationseinheit abgezogenen Wassers zu weiteren Behandlungsschritten.

In einer Ausführungsform des Verfahrens erfolgt die Zugabe des mindestens einen Ausflockungsmittels zu dem zu reinigenden Wasser zur Ausflockung von im Wasser enthaltenen organischen Bestandteilen in mindestens einer dem Behälter vorgeschalteten Flockulationseinheit. Bevorzugt erfolgt die Ausflockung der im zu reinigenden Wasser enthaltenen gelösten organischen Bestandteile mittels dafür bekannter chemischer Substanzen, wobei die Verwendung von Fe³⁺- oder Al³⁺-Salzen wie z.B. FeCl₃ sich als besonders vorteilhaft erwiesen hat.

Das in der Flockulationseinheit mit dem Ausflockungsmittel versetzte Wasser wird anschließend bevorzugterweise in den mindestens einen Behälter in Form eines Flüssigkeitsstroms überführt, in welchem der Flüssigkeitsstrom mit über eine Begasungseinheit in den Behälter eingeführten Gasblasen, insbesondere Luftblasen versetzt wird. Das sich dabei ausbildende Agglomerat aus Gasblasen und ausgeflockten organischen Bestandteilen steigt an die Oberfläche der im Behälter befindlichen Flüssigkeit auf, sammelt sich dort und wird mechanisch abgetrennt. Das so von der Mehrheit der organischen Bestandteile befreite Wasser wird abschließend durch die an der Bodenfläche des Behälters angeordnete Filtrationseinheit abgezogen und weiteren Behandlungsschritten zugeführt.

Das vorliegende Verfahren stellt entsprechend einen Hybridprozess aus Mikroflotation und Membranfiltration in einer einzigen singulären Vorrichtungseinheit dar.

Die Erfindung wird nachfolgend unter Bezugnahme auf die Figuren der Zeichnungen an einem Ausführungsbeispiel näher erläutert. Es zeigen:

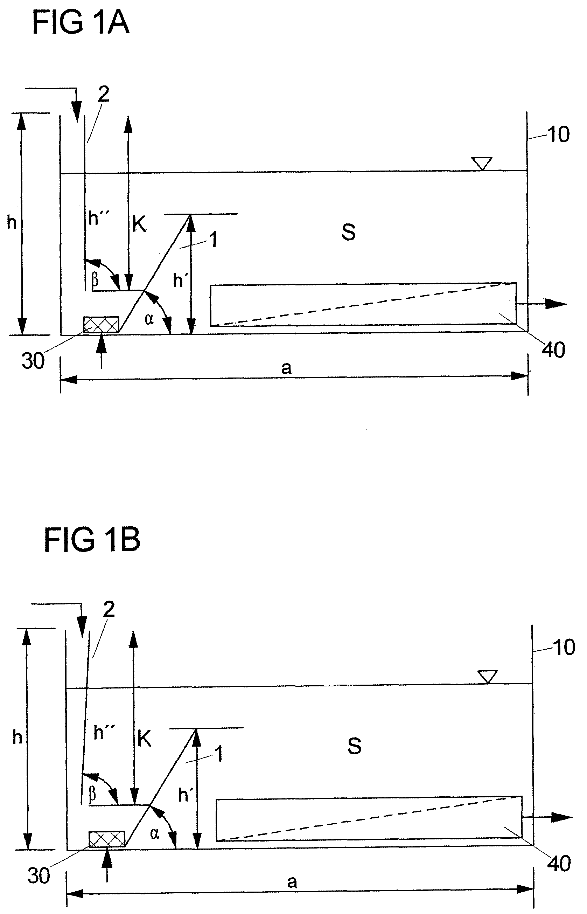

- Fig. 1a: eine schematische Seitenansicht einer Vorrichtung zur Reinigung vom Wasser gemäß einer ersten Ausführungsform,
- Fig. 1 b: eine schematische Seitenansicht einer Vorrichtung zur Reinigung von Wasser gemäß einer zweiten Ausführungsform,
- Fig. 2: eine Draufsicht auf eine Vorrichtung zur Reinigung von Wasser;
- Fig. 3: eine schematische Seitenansicht einer Vorrichtung zur Reinigung von Wasser gemäß einer dritten Ausführungsform; und
- Fig. 4: eine schematische Darstellung eines Verfahrens in einer Anlage umfassend eine Vorrichtung zur Reinigung von Wasser.

Ein allgemeiner Aufbau einer ersten Ausführungsform der erfindungsgemäßen Vorrichtung ist in Fig. 1 a gezeigt.

Die Seitenansicht der Fig. 1a umfasst einen Behälter 10, eine Begasungseinheit 30, eine Filtrationseinheit 40, ein erstes Leitblech 1 und ein zweites Leitblech 2. Der Behälter 10 weist eine obere Seite auf, die offen ist, und eine gegenüber dieser oberen Seite liegende Bodenfläche. Die Begasungseinheit 30, das erste Leitblech 1 und die Filtrationseinheit 40 sind entlang dieser Bodenfläche und auf dieser Bodenfläche angeordnet.

Der Behälter 10 umfasst neben der oberen offenen Seite und der Bodenfläche zwei gegenüberliegende längliche Seitenwände und zwei gegenüberliegende kurze Seitenwände. Insgesamt ist der Behälter 10 in Form eines Quaders mit einer Länge a, einer Breite b und einer Höhe h ausgebildet. Die länglichen Seitenwände des Behälters werden durch die Länge a und die Höhe h bestimmt, während die Abmaße der kurzen Seitenwände über die Breite b und die Höhe h des Behälters festgelegt sind.

In der vorliegenden ersten Ausführungsform beträgt die Länge a z. B. 1 m, die Breite b 0,61 m und die Höhe h 0,5 m.

Es ist wichtig anzumerken, dass diese Abmaße lediglich beispielhafter Natur sind und im vorliegenden Fall nur ausgewählt worden sind, um die entsprechenden Größenverhältnisse und Anordnungsverhältnisse der einzelnen Komponenten der Ausführungsform der Vorrichtung zueinander zu beschreiben und darzustellen, wobei im Falle einer Modellübertragung die Proportionen der einzelnen Komponenten gleich oder zumindest ähnlich zueinander sein können. Auch sei darauf hingewiesen, dass bei einer Maßstabsvergrößerung der beschriebenen Ausführungsform der Vorrichtung eine Berücksichtigung der hydraulischen Ähnlichkeit erfolgen kann. Dem Fachmann sind Methoden bekannt, wie er ausgehend z.B. von einer Laboranlage oder einer Pilot-Anlage ein up-scale der Anlage und des Prozesses durchführen kann.

Für den Fall, dass der Behälter 10 die oben angegebenen Abmaße aufweist, ist die Begasungseinheit 30 bestehend aus vier einzelnen Begasungsmembranen in einem Abstand von z.B. 0,1 m von einer ersten kurzen Seitenwand mit der Breite b angeordnet. Die Begasungseinheit 30 erstreckt sich über die gesamte Breite b des Behälters 10 und kann aus mehreren Scheiben, Platten, Rohren oder weiteren geometrischen Formen bestehen.

Oberhalb dieser Begasungseinheit 30 befindet sich das zweite Leitblech 2, das ebenfalls mit einem Abstand von 0,1 m von der ersten kurzen Seitenwand angeordnet ist und an den Seitenkanten der länglichen Seite der oberen offenen Seite des Behälters 10 befestigt ist. In der in Figur 1a gezeigten ersten Variante ist das zweite Leitblech 2 senkrecht und damit parallel zur ersten kurzen Seitenwand angeordnet. Der Abstand zwischen der Bodenfläche des Behälters 10 und dem zweiten Leitblech 2 beträgt in der vorliegenden Ausführungsform 0,12 m.

Folgt man der Seitenlänge a des Behälters 10 ist in der vorliegenden Ausführungsform das erste Leitblech 1 mit einem Abstand von z.B. 0,2 m von der ersten kurzen Seitenwand angeordnet und an der Bodenfläche des Behälters 10 befestigt. Das erste Leitblech 1 ist mit einem Winkel α von 50 bis 90°, z.B. von 60° in Bezug auf die Bodenfläche des Behälters 10 weg von der ersten kurzen Seitenwand hin zu der zweiten kurzen Seitenwand des Behälters 10 geneigt. Entsprechend beträgt der Abstand zwischen der Bodenfläche des Behälters 10 und der oberen Kante des ersten Leitblechs 1 aufgrund der Neigung z.B. 0,26 m.

In Blickrichtung von der ersten kurzen Seitenwand entlang der Länge a des Behälters 10 ist hinter dem ersten Leitblech 1 die Filtrationseinheit 40 mit einem Abstand von z.B. 0,39 m in Bezug auf die erste kurze Seitenwand angeordnet. Die Filtrationseinheit 40 erstreckt sich entlang der Bodenfläche bis hin zu der zweiten kurzen Seitenwand und weist somit eine Länge von z.B. 0,61 m auf. Im Falle der hier gezeigten Ausführungsform beträgt die Höhe der Filtrationseinheit z.B. 0,14 m und die Höhe des Füllstandes des Behälters 10 z.B. 0,33 m. Somit ist die Filtrationseinheit vollständig eingetaucht in die in dem Behälter 10 vorhandene Flüssigkeit.

Die in Figur 1b gezeigte zweite Ausführungsform entspricht im Wesentlichen der in Figur 1a gezeigten ersten Ausführungsform, so dass im Folgenden vollumfänglich auf die Ausführungen zur ersten Ausführungsform Bezug genommen werden kann.

Die zweite Ausführungsform der Figur 1b unterscheidet sich von der ersten Ausführungsform in Figur 1a lediglich in Hinblick auf den Neigungswinkel des zweiten Leitblechs 2. Das zweite Leitblech 2, welches an den oberen Seitenkanten des Behälters 10 befestigt ist, ist im Falle der zweiten Ausführungsform mit einem Winkel β von 70-90°, bevorzugt von 80° in Bezug auf die dem Behälterboden gegenüber liegende offene Seite des Behälters 10 in Richtung der ersten kurzen Seitenwand des Behälters 10 geneigt. Aufgrund der Neigung des zweiten Leitblechs 2 wird der Abstand zwischen der ersten kurzen Seitenwand und des unteren Endes des zweiten Leitblechs 2 verkürzt und damit die Spaltbreite für den Durchfluss des zugeführten mit dem Ausflockungsmittel versetzten Wasser verringert. Dies wiederum erhöht die Strömungsgeschwindigkeit des Flockungsgemisches.

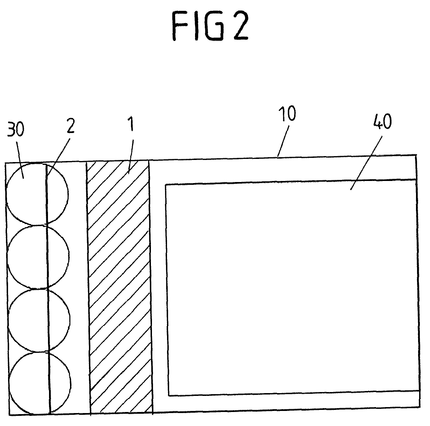

Figur 2 zeigt eine Draufsicht auf die in der Figur 1 gezeigte erste Ausführungsform, wobei vorliegend die Anordnung der vier keramischen Begasungsmembranen auf der Bodenfläche des Begasungsbehälters 10 in Bezug auf die Anordnung des ersten und zweiten Leitbleches 1, 2 verdeutlicht wird. Die vier keramischen Begasungsmembranen sind parallel entlang der ersten kurzen Seitenwand innerhalb eines Abstandes von 0,1 m von besagter erster kurzer Seitenwand angeordnet. Der Durchmesser jeder der Begasungsmembrane beträgt im vorliegenden Fall 0,15 m, kann jedoch auch von diesen Abmaßen abweichen.

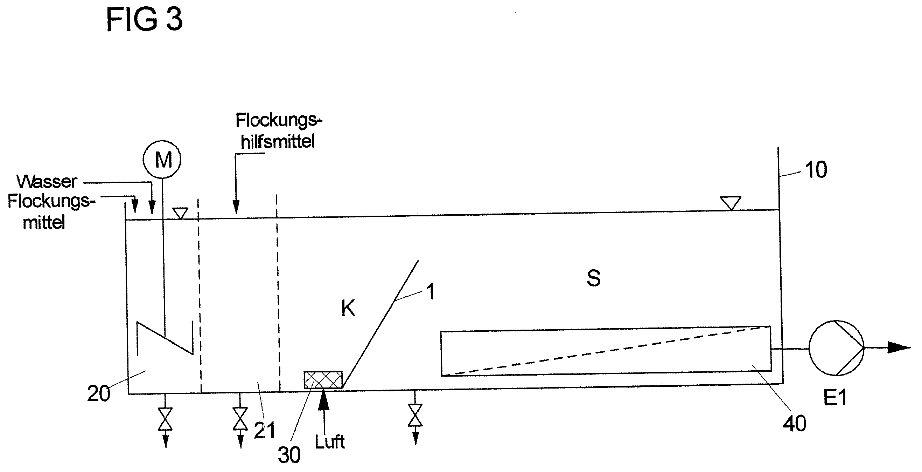

Figur 3 zeigt eine weitere bevorzugte Ausführungsform der vorliegenden Vorrichtung. Im Unterschied zu den in den Figuren 1a, b gezeigten Ausführungsformen, in denen die Flockulationseinheit 20 räumlich getrennt vom Behälter 10 angeordnet ist (nicht gezeigt), ist in der in Figur 3 dargestellten Ausführungsform die Flockulationseinheit 20 in den Behälter 10 integriert.

Hierbei ist ein Flockulationsraum bzw. -abschnitt 20 des Behälters 10 vorgesehen, in welchen das zu reinigende Wasser und das Flockungsmittel eingetragen werden.

Nach Vermischen des zu reinigenden Wassers mit dem Flockungsmittel z.B. unter Verwendung eines Rührers kann das Gemisch im oberen Bereich des Flockulationsabschnitts 20 über eine Trennwand in einen weiteren von der eigentlichen Flotationszelle 10 separaten Abschnitt 21 eingeführt werden, in welchem ein weiteres Flockulationshilfsmittel zugesetzt werden kann. Entsprechend kann die zwischen Flockulationsabschnitt 20 und dem Abschnitt 21 zur Zufuhr der weiteren Flockulationshilfsmittel vorgesehene Trennwand eine Höhe aufweisen, die einen Übertrag des mit dem Flockulationsmittel versetzten Wassers aus dem Flockulationsabschnitt 20 in den Abschnitt 21 ermöglicht.

Nach Zugabe der weiteren Flockulationshilfsmittel im Abschnitt 21 wird das zu reinigende Wasser von oben nach unten im Abschnitt 21 geführt und kann folgend am Boden des Behälters in die Kontaktzone K des Behälters 10 eintreten und über die Begasungseinheit 30 geleitet werden. Demnach wird das zu reinigende Wasser in der Ausführungsform der Figur 3 mäanderförmig aus dem Flockulationsabschnitt 20 in den Abschnitt 21 und abschließend in die Kontaktzone K der Flotationszelle bzw. Behälters 10 eingeführt.

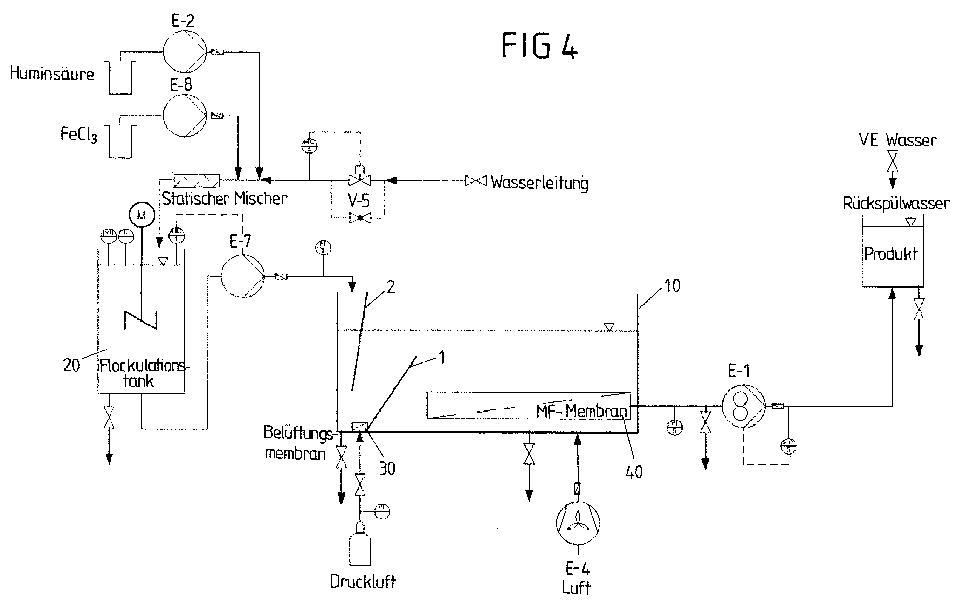

In Verbindung mit der Figur 4 wird im Folgenden eine Ausführungsform des Verfahrens zur Reinigung von Wasser unter Verwendung einer Vorrichtung gemäß der zweiten Ausführungsform beschrieben.

Im vorliegenden experimentellen Verfahren wird Schmutzwasser verwendet, das mit Huminstoffen versetzt wurde.

Die Gesamtheit organischer Stoffe im Schmutzwasser wird vorliegend durch Huminstoffe simuliert, welche auch in der Natur durch normale biologische Verwesung entstehen. Huminstoffe sind komplex verkettete Molekülketten aus Alkyl- und aromatischen Einheiten mit funktionellen Gruppen, wie zum Beispiel -COOH, -NH₂ und -RSH. Aufgrund der ionisierten Säuregruppen bilden sie negativ geladene Makromoleküle.

Zur Ausflockung der im Wasser enthaltenen Huminstoffe bieten sich vor allem dreiwertige Ionen enthaltende eisen- und aluminiumhaltige Substanzen als Fällungsmittel an, welche flüssig oder fest vorliegen können. Im vorliegenden Fall wird festes FeCl₃ zur Herstellung eines flüssigen Fällungsmittels verwendet. Das Schmutzwasser wird mit der Lösung enthaltend Huminsäuren versetzt und anschließend mit der FeCl₃ -haltigen Lösung unter Verwendung eines statischen Mischers im Flockulationstank 20 vermischt. Im Flockulationstank 20 erfolgt eine Ausflockung der im Schmutzwasser enthaltenen Huminsäuren durch das Flockungsmittel FeCl₃.

Das mit FeCl₃ versetzte Schmutzwasser wird im vorliegendenen experimentellen Verfahren anschließend aus dem Flockulationstank 20 in den Trennungsbehälter- bzw. Begasungsbehälter 10 mit einem Volumenstrom von 400 Liter pro Stunde eingeleitet. Die Einleitung in den Behälter 10 erfolgt in einem Bereich zwischen der ersten kurzen Seitenwand des Behälters 10 und dem zweiten Leitblech 2, d.h. in einen Bereich vor dem zweiten Leitblech 2. Dies kann von oben über die offene Seite des Behälters 10 oder aber auch seitlich unten in den Behälter 10 erfolgen. Das zweite Leitblech 2 ist dabei mit einem Winkel β von z.B. 80° hin zu der kurzen Seitenwand geneigt, so dass es aufgrund der Verringerung der Spaltbreite zwischen Seitenwand und zweitem Leitblech zu einer Erhöhung der Fließgeschwindigkeit des eingeleiteten Ausflockungsgemisches in Richtung der am Boden des Begasungsbehälters 10 angeordneten Begasungsmembran 30 kommt.

Über die Begasungseinheit 30, die vorliegend aus vier einzelnen Begasungsmembranen besteht, wird Gas, insbesondere Luft injiziert, wobei es zu einer Ausbildung von Mikroblasen unmittelbar in dem eingeleiteten mit Flockungsmittel versetzten Wasser kommt. Die so gebildeten Flocken-Luftblasen-Agglomerate werden entlang des geneigten ersten Leitbleches 1 in die Richtung der Oberfläche der in dem Behälter 10 enthaltenen Flüssigkeit und somit in die Separationszone S des Behälters 10 geleitet.

Blasen, welche in der Mitte der Gasmembran entweichen, haben aufgrund des Schwarmcharakters der Blasenwolke eine kleinere Aufstiegsgeschwindigkeit als die äußeren. Je höher die Gasmembran sich im Wasser befindet, das heißt, je größer das sich im Behälter 10 befindliche Volumen der Gasmembran ist, desto kleiner ist die Aufstiegsgeschwindigkeit infolge des kleineren Blasendurchmessers. Insgesamt entweichen die Blasen relativ gleichmäßig über die gesamte Membranoberfläche. Je größer der eingestellte Gasdruck ist, desto mehr und desto größere und schnellere Blasen entstehen. Bei einer Verkleinerung des Eintrittsspaltes auf 1 cm, das heißt des Durchgangsspaltes für das eintretende Ausflockungsgemisch, liegt die Eintrittsgeschwindigkeit des Ausflockungsgemisches in die Kontaktzone K des Behälters 10 in derselben Größenordnung wie die Geschwindigkeit des Blasenaufstiegs, so dass die Blasen nicht im Bereich des Durchtrittsspaltes am linken Beckenrand aufsteigen können.

Durch die Anlagerung der Mikroblasen an die ausgeflockten organischen Bestandteile steigen diese in Richtung der Oberfläche der sich im Behälter 10 befindlichen Flüssigkeit und bilden auf der Wasseroberfläche eine Feststoffschicht aus, die mechanisch zum Beispiel unter Verwendung von Räumeinrichtungen wie z.B. Scrapern abgetrennt wird. Unterhalb dieser Feststoffschicht befindet sich das gereinigte Wasser in der Separationszone S des Behälters 10. Das so vorgereinigte Wasser wird unter Verwendung einer Pumpe E1 durch die getauchte Filtrationseinheit 40 abzogen und steht als gereinigtes Wasser der weiteren Aufarbeitung, wie zum Beispiel weiteren Entsalzungsprozessen zur Verfügung.

Um ein Fouling der Oberfläche der Filtrationseinheit 40 zu verhindern, kann über mit Löchern versehene Schläuche Luft unmittelbar auf die Oberfläche der Filtrationseinheit 40 geleitet werden, wodurch eine mechanische Entfernung von Ablagerungen auf der Oberfläche der Filtrationseinheit 40 bewirkt wird.

### Liste der Referenzzeichen

- 1: erstes Leitblech
- 2: zweites Leitblech

- 10: Behälter

- 20: Flockulationseinheit
- 21: Abschnitt des Behälters 10 zum Eintrag von weiteren Ausflockungshilfsmitteln

- 30: Begasungseinheit

- 40: Filtrationseinheit

- K: Kontaktzone des Behälters 10
- S: Separationszone des Behälters 10
- α: Neigungswinkel des ersten Leitblechs 1
- β: Neigungswinkel des zweiten Leitblechs 2

## Patentansprüche

1. Vorrichtung zur Reinigung von Salzwasser, insbesondere Vorreinigung von Meerwasser, umfassend
- mindestens einen Behälter (10) zur Aufnahme von mit mindestens einem Ausflockungsmittel versetzten Wasser zur Abtrennung von im Wasser enthaltenen organischen und ggf. biologischen Bestandteilen,
- wobei der mindestens eine Behälter (10) mindestens eine Kontaktzone K zur Kontaktierung des mit dem Ausflockungsmittel versetzten Wassers mit mindestens einem Gas, insbesondere Luft, und mindestens eine Separationszone S zur Abtrennung der durch das Gas aufgetriebenen ausgeflockten organischen Bestandteile umfasst,
- wobei in der mindestens einen Kontaktzone K mindestens eine Begasungseinheit (30) aus einer oder mehreren keramischen Begasungsmembranen mit einer mittleren Porengröße von 2 µm und
in der mindestens einen Separationszone S mindestens eine Filtrationseinheit (40) angeordnet sind;
**dadurch gekennzeichnet, dass**
die Begasungseinheit (30) direkt mit einer Druckgasleitung oder einer Gasflasche verbunden ist, so dass das mindestens eine Gas über die mindestens eine Begasungseinheit (30) ohne Verwendung eines Flüssigkeitsträgers direkt in den Behälter (10) injizierbar ist.

2. Vorrichtung nach Anspruch 1, **dadurch gekennzeichnet, dass** die mindestens eine Filtrationseinheit (40) und die mindestens eine Begasungseinheit (30) horizontal versetzt zueinander angeordnet sind.

3. Vorrichtung nach einem der vorhergehenden Ansprüche, **dadurch gekennzeichnet, dass** der Behälter (10) ein an einer oberen der Bodenfläche gegenüberliegenden Fläche offener Behälter (10) der Länge a, der Breite b und der Höhe h mit zwei länglichen und zwei kurzen Seitenwänden ist.

4. Vorrichtung nach einem der vorhergehenden Ansprüche, **dadurch gekennzeichnet, dass** die mindestens eine Filtrationseinheit (40) im Behälter (10) unterhalb der durch die aufgetriebenen ausgeflockten organischen Bestandteile gebildeten Schicht, insbesondere am Boden des Behälters (10), innerhalb der Separationszone S angeordnet ist.

5. Vorrichtung nach einem der vorhergehenden Ansprüche, **dadurch gekennzeichnet, dass** die mindestens eine Filtrationseinheit (40) eine keramische Filtrationsmembran, insbesondere eine keramische Mikrofiltrationsmembran oder Ultrafiltrationsmembran, ist.

6. Vorrichtung nach einem der vorhergehenden Ansprüche, **dadurch gekennzeichnet, dass** die mindestens eine Filtrationseinheit (40) ein Membranmodul mit einer mittleren Porengröße von 20 bis 500 nm, bevorzugt von 100 bis 300 nm, insbesondere bevorzugt von 200 nm ist.

7. Vorrichtung nach einem der vorhergehenden Ansprüche, **gekennzeichnet durch** mindestens ein Mittel zum Belüften der mindestens einen Filtrationseinheit (40).

8. Vorrichtung nach einem der vorhergehenden Ansprüche, **dadurch gekennzeichnet, dass** die mindestens eine Begasungseinheit (30) aus 1 bis 10, bevorzugt 2 bis 8, insbesondere bevorzugt aus 4 bis 6 Begasungsmembranen aufgebaut ist.

9. Vorrichtung nach einen der vorhergehenden Ansprüche, **dadurch gekennzeichnet, dass** die mindestens eine Begasungseinheit (30) aus parallel und/oder senkrecht übereinander angeordneten keramischen Begasungsmembranen aufgebaut ist.

10. Vorrichtung nach einem der vorhergehenden Ansprüche, **dadurch gekennzeichnet, dass** zwischen Kontaktzone K und Separationszone S mindestens ein erstes Leitblech (1) zum Lenken der der durch das Gas aufgetriebenen ausgeflockten organischen Bestandteile aus der Kontaktzone K in die Separationszone S angeordnet ist.

11. Vorrichtung nach einem der vorhergehenden Ansprüche, **dadurch gekennzeichnet, dass** mindestens ein zweites Leitblech (2) im Bereich der Kontaktzone K an gegenüberliegenden länglichen Seitenwänden des Behälters (10) angeordnet ist.

12. Vorrichtung nach Anspruch 11, **dadurch gekennzeichnet, dass** das erste Leitblech (1) und das zweite Leitblech (2) versetzt zueinander und gegenüberliegend angeordnet sind, so dass eine mäanderförmige Strömung durch die Leitbleche (1, 2) bewirkbar ist.

13. Vorrichtung nach einem der vorhergehenden Ansprüche, **gekennzeichnet durch** mindestens eine dem Behälter (10) vorgeschaltete Flockulationseinheit (20) zur Aufnahme des zu reinigenden Wassers und von mindestens einem Ausflockungsmittel zur Ausflockung von im Wasser enthaltenen organischen Bestandteilen.

14. Verfahren zur Reinigung von Salzwasser, insbesondere zur Vorreinigung von Meerwasser, unter Verwendung einer Vorrichtung nach einem der vorhergehenden Ansprüche umfassend die Schritte:
- Einführen von mit mindestens einem Ausflockungsmittel versetzten Wassers in mindestens einen Behälter (10);
- Kontaktieren des mit mindestens einem Ausflockungsmittel versetzten Wassers mit mindestens einem mittels mindestens einer Begasungseinheit (3) in einen Behälter (10) eingetragenen Gases, insbesondere Luft, zur Ausbildung eines Flocken-Gasblasen-Agglomerats, insbesondere eines Flocken-Mikrogasblasen-Agglomerats,
- Abtrennen des an die Oberfläche des im Behälter (10) befindlichen Wassers gestiegenen Flocken-Gasblasen-Agglomerats,
- Abziehen des von dem Flocken-Gasblasen-Agglomerats befreiten Wassers durch mindesten eine in dem Behälter (10) angeordnete Filtrationseinheit (40), und
- Zuführen des durch die Filtrationseinheit (40) abgezogenen Wassers zu weiteren Behandlungsschritten.

15. Verfahren nach Anspruch 14, **dadurch gekennzeichnet, dass** die Zugabe des mindestens einen Ausflockungsmittels zu dem zu reinigenden Wasser zur Ausflockung von im Wasser enthaltenen organischen Bestandteilen in mindestens einer dem Behälter (10) vorgeschalteten Flockulationseinheit (20) erfolgt.

## Claims

1. An apparatus for cleaning water, in particular precleaning seawater, comprising
- at least one tank (10) for receiving water containing at least one flocculating agent for separating organic and possibly biological constituents contained in the water,
- wherein the at least one tank (10) comprises at least one contact zone K for contacting the water containing the flocculating agent with at least one gas, in particular air, and at least one separation zone S for separating the flocculated organic constituents buoyed up by the gas,
- wherein at least one gassing unit (30) of one or multiple ceramic gassing membranes with an average pore size of 2 µm and is arranged in the at least one contact zone K and
at least one filtration unit (40) is arranged in the at least one separation zone S,
**characterized in that**
the gassing unit (30) is directly connected to a compressed-air line or gas cylinder such that the at least one gas is injected via the at least one gassing unit (30) without using a liquid carrier.

2. The apparatus according to claim 1, **characterized in that** the at least one filtration unit (40) and the at least one gassing unit (30) are arranged horizontally offset to one another.

3. The apparatus according to any of the preceding claims, **characterized in that** the tank (10) is a tank open on an upper surface opposite the bottom surface of the length a, the width b and the height h with two oblong and two short side walls.

4. The apparatus according to any of the preceding claims, **characterized in that** the at least one filtration unit (40) is arranged in the tank (10) below the layer formed by the flocculated organic constituents buoyed up, in particular at the bottom of the tank (10), within the separation zone S.

5. The apparatus according to any of the preceding claims, **characterized in that** the at least one filtration unit (40) is a ceramic filtration membrane, in particular a ceramic microfiltration membrane or ultrafiltration membrane.

6. The apparatus according to any of the preceding claims, **characterized in that** the at least one filtration unit (40) is a membrane module with a mean pore size of 20 to 500 nm, preferably of 100 to 300 nm, particularly preferably of 200 nm.

7. The apparatus according to any of the preceding claims, **characterized by** at least one means for aerating the at least one filtration unit (40).

8. The apparatus according to any of the preceding claims, **characterized in that** the at least one gassing unit (30) is constructed of 1 to 10, preferably 2 to 8, particularly preferably of 4 to 6 gassing membranes.

9. The apparatus according to any of the preceding claims, **characterized in that** the at least one gassing unit (30) is constructed of ceramic gassing membranes arranged in parallel and/or vertically one above the other.

10. The apparatus according to any of the preceding claims, **characterized in that** between contact zone K and separation zone S at least one first baffle plate (1) is arranged for directing the flocculated organic constituents buoyed up by the gas from the contact zone K into the separation zone S.

11. The apparatus according to any of the preceding claims, **characterized in that** at least one second baffle plate (2) is arranged in the region of the contact zone K on opposite oblong side walls of the tank (10).

12. The apparatus according to claim 11, **characterized in that** the first baffle plate (1) and the second baffle plate (2) are arranged offset to each other and opposite each other, so that a meandrous flow can be effected by the baffle plate (1, 2).

13. The apparatus according to any of the preceding claims, **characterized by** at least one flocculation unit (20) upstream of the tank (10) for receiving the water to be cleaned and at least one flocculating agent for flocculating organic constituents contained in the water.

14. A method for cleaning water, in particular precleaning seawater, by using an apparatus according to any of the preceding claims, comprising the following steps:
- introducing water containing at least one flocculating agent into at least one tank (10);
- contacting the water containing at least one flocculating agent with at least one gas, in particular air, introduced into a tank (10) by means of at least one gassing unit (30), for forming an agglomerate of floccules and gas bubbles, in particular an agglomerate of floccules and micro gas bubbles,
- separating the agglomerate of floccules and gas bubbles risen to the surface of the water present in the tank (10),
- withdrawing the water liberated from the agglomerate of floccules and gas bubbles through at least one filtration unit (40) arranged in the tank (10), and
- supplying the water withdrawn through the filtration unit (40) to further treatment steps.

15. The method according to claim 14, **characterized in that** the addition of the at least one flocculating agent to the water to be cleaned is effected for flocculating organic constituents contained in the water in at least one flocculation unit (20) upstream of the tank (10).

## Revendications

1. Dispositif de nettoyage d'eau salée, en particulier de prénettoyage d'eau de mer comprenant
- au moins un récipient (10) pour la réception d'eau additionnée d'au moins un agent de floculation pour la séparation d'éléments organiques et éventuellement biologiques contenus dans l'eau,
- dans lequel l'au moins un récipient (10) comporte au moins une zone de contact K pour le contact de l'eau additionnée de l'agent de floculation avec au moins un gaz, en particulier de l'air, et au moins une zone de séparation S pour la séparation des éléments organiques floculés gonflés par le gaz,
- dans lequel au moins une unité de fumigation (30) composée d'une ou plusieurs membranes de fumigation céramiques avec une grandeur de pore de 2 µm est agencée dans l'au moins une zone de contact K et
au moins une unité de filtration (40) étant agencée dans l'au moins une zone de séparation S ;
**caractérisé en ce que**
l'unité de fumigation (30) est directement reliée à une conduite de gaz comprimé ou une bouteille de gaz de sorte que l'au moins un gaz puisse être injecté par l'au moins une unité de fumigation (30) sans utiliser de support de liquide directement dans le récipient (10).

2. Dispositif selon la revendication 1, **caractérisé en ce que** l'au moins une unité de filtration (40) et l'au moins une unité de fumigation (30) sont agencées en déport horizontal l'une par rapport à l'autre.

3. Dispositif selon l'une quelconque des revendications précédentes, **caractérisé en ce que** le récipient (10) est un récipient (10) ouvert sur une surface supérieure en regard de la surface de fond de la longueur a, de la largeur b et de la hauteur h avec deux parois latérales oblongues et deux parois latérales courtes.

4. Dispositif selon l'une quelconque des revendications précédentes, **caractérisé en ce que** l'au moins une unité de filtration (40) est agencée dans le récipient (10) sous la couche formée par les éléments organiques floculés gonflés, en particulier sur le fond du récipient (10) dans la zone de séparation S.

5. Dispositif selon l'une quelconque des revendications précédentes, **caractérisé en ce que** l'au moins une unité de filtration (40) est une membrane de filtration céramique, en particulier une membrane de microfiltration céramique ou une membrane d'ultrafiltration.

6. Dispositif selon l'une quelconque des revendications précédentes, **caractérisé en ce que** l'au moins une unité de filtration (40) est un module de membrane avec une grandeur de pore moyenne de 20 à 500 nm, de préférence de 100 à 300 nm, en particulier de préférence de 200 nm.

7. Dispositif selon l'une quelconque des revendications précédentes, **caractérisé par** au moins un moyen de ventilation d'au moins une unité de filtration (40).

8. Dispositif selon l'une quelconque des revendications précédentes, **caractérisé en ce que** l'au moins une unité de fumigation (30) est constituée de 1 à 10, de préférence de 2 à 8, en particulier de préférence de 4 à 6 membranes de fumigation.

9. Dispositif selon l'une quelconque des revendications précédentes, **caractérisé en ce que** l'au moins une unité de fumigation (30) est constituée de membranes de fumigation céramiques agencées les unes au-dessus des autres parallèlement et/ou perpendiculairement.

10. Dispositif selon l'une quelconque des revendications précédentes, **caractérisé en ce qu'**au moins une première tôle de guidage (1) pour le guidage des éléments organiques floculés gonflés par le gaz de la zone de contact K dans la zone de séparation S est agencée entre la zone de contact K et la zone de séparation S.

11. Dispositif selon l'une quelconque des revendications précédentes, **caractérisé en ce qu'**au moins une seconde tôle de guidage (2) est agencée dans la zone de la zone de contact K sur des parois latérales oblongues en regard du récipient (10).

12. Dispositif selon la revendication 11, **caractérisé en ce que** la première tôle de guidage (1) et la seconde tôle de guidage (2) sont agencées en déport et en regard l'une de l'autre de sorte à pouvoir provoquer un écoulement en méandres par les tôles de guidage (1, 2).

13. Dispositif selon l'une quelconque des revendications précédentes, **caractérisé par** au moins une unité de floculation (20) montée en amont du récipient (10) pour la réception de l'eau à nettoyer et d'au moins un agent de floculation pour la floculation d'éléments organiques contenus dans l'eau.

14. Procédé de nettoyage d'eau salée, en particulier de prénettoyage d'eau de mer en utilisant un dispositif selon l'une quelconque des revendications précédentes, comprenant les étapes :
- l'introduction d'eau additionnée d'au moins un agent de floculation dans au moins un récipient (10) ;
- le contact de l'eau additionnée d'au moins un agent de floculation avec au moins un gaz inséré à l'aide d'au moins une unité de fumigation (3) dans un récipient (10), en particulier de l'air pour la réalisation d'un agglomérat de flocons et piqûres de gaz, en particulier d'un agglomérat de flocons et micropiqûres de gaz,
- la séparation de l'agglomérat de flocons et piqûres de gaz boursouflé sur la surface de l'eau se trouvant dans le récipient (10),
- le retrait de l'eau libérée de l'agglomérat de flocons et piqûres de gaz par au moins une unité de filtration (40) agencée dans le récipient (10) et
- l'amenée de l'eau retirée par l'unité de filtration (40) aux autres étapes de manipulation.

15. Procédé selon la revendication 14, **caractérisé en ce que** l'ajout d'au moins un agent de floculation à l'eau à nettoyer est effectué pour la floculation d'éléments organiques contenus dans l'eau dans au moins une unité de floculation (20) montée en amont du récipient (10).
